# EUROPÄISCHE PATENTANMELDUNG

(11) **EP 2 366 294 A1**
(43) Veröffentlichungstag der Anmeldung: **21.09.2011**
(21) Anmeldenummer: 10405051.3
(22) Anmeldetag: 11.03.2010
(51) Int. Cl.: A23L 1/304, A23L 2/52

(54) **Basisches Wasser**

(71) Anmelder: Wachter, Dany, 8853 Lachen (CH)
(72) Erfinder: Wachter, Dany, 8853 Lachen (CH)
(74) Vertreter: Hammer, Bruno

(57) **Zusammenfassung**

Das basische Wasser wird aus einem Gemisch von Lauge und Wasser hergestellt und ist chemisch stabil.

Das basische Wasser kann beispielsweise, als Entsäuerungs-Getränk und/oder pH-Stabilisations-Mittel verwendet werden. Die Lauge wird vorzugsweise mit einem Elektrolyse-Verfahren oder einem mit einem Diaphragmalyse-Verfahren, hergestellt. Als Lauge eignen sich Natronlauge (NaOH), Kaliumlauge (KOH) oder Calziumlauge (CaOH₂) aber auch andere Laugen. Das Wasser kann beispielsweise Trinkwasser, Tafelwasser, Quellwasser, Mineralwasser, Schmelzwasser, Regenwasser, Brunnenwasser, Grundwasser, Leitungswasser, Osmosewasser und / oder Heilwasser sein. Dem basischen Wasser können Aromastoffe und/oder Farbstoffe beigemischt werden.

Das basische Wasser kann beispielsweise als Lebensmittel oder hochwertiges Nahrungsergänzungsmittel, als Mineralisierungsmittel, als Getränk oder als Entschlackungsmittel, als Hydrierungsmittel, als Mineralisierungsmittel oder als Entsäuerungsmittel für Mensch und Tier verwendet werden. Dem basischen Wasser können auch Tenside beigemischt werden, z.B. für Anwendungen als Spritzmittel für Pflanzen und andere Anwendungen in der Landwirtschaft oder der Verdünnung von anderen Tensiden, die dann umweltfreundlicher und ungefährlicher sind, oder als Basis für Tenside sein kann das heisst, dass das basische Wasser die Grundlage für jegliche Tensid-Produktion eingesetzt werden kann, ohne dass normales Wasser beigegeben wird oder dass das basische Wasser als Grundprodukt für andere die Oberflächenspannung reduzierende Produkte verwendet werden kann.

## Beschreibung

Die Erfindung betrifft die Herstellung eines basischen Wassers nach dem Oberbegriff von Anspruch 1, sowie auf die Verwendung des nach dem Verfahren hergestellten basischen Wassers.

Basisches Wasser kommt in der Natur praktisch nicht vor. Einer der Gründe dafür liegt darin, dass basische Wasser nicht stabil sind. Man kennt bis heute auch kein Verfahren ein stabiles basisches Wasser herzustellen. Es wäre aber erwünscht über ein stabiles basisches Wasser zu verfügen. Das Verfahren nach der Erfindung ermöglicht die Herstellung eines stabilen basischen Wassers. Das Verfahren weist die Merkmale des unabhängigen Anspruchs 1 auf. Die abhängigen Ansprüche beziehen sich auf vorteilhafte Ausführungsformen der Erfindung.

Als Wasser für die Herstellung des basischen Wassers sind Trinkwasser, Tafelwasser, Quellwasser, Mineralwasser, Schmelzwasser, Regenwasser, Leitungswasser, Osmosewasser, Brunnenwasser, Grundwasser, Heilwasser geeignet. Dem Wasser eine vorzugsweise ein mit einem Diaphragmalyse Verfahren oder Elektrolyse-Verfahren hergestellte Lauge mit einem pH-Wert von 7 bis 14, vorzugsweise pH 9 bis 10 zugemischt. Das basische Wasser das nach dem Verfahren der Erfindung hergestellt ist, ist chemisch stabil. Das dabei entstehende basische Wasser ist als basisches Getränk geeignet. Es eignet sich auch als Grundlösung für andere chemische basierende Lösungen. Zum Beispiel einer kationischen Grundlösung für laugenbasierende Gesundheitsbäder im Wellnessbereich oder als kationisches Grundprodukt für die Produktion von auf Tensid basierenden Produkten.

Das basische Wasser wird mit Tensid gemischt. Solches basisches Wasser ist mit geringerem Gehalt von Tensid mindestens so wirksam oder wirksamer als ein Gemisch von nichtbasischem Wasser und Tensid. Es ergibt sich also eine Einsparung von Tensid bei besserer Wirkung. Tenside dienen zur Herabsetzung der Oberflächenspannung von Flüssigkeiten, in unserem Fall hilft das basische Wasser und fördert die Reduzierung der Oberflächenspannungen und chemisch basierende Tenside können reduziert und mit dem basischen Wasser verdünnt werden. Die positiven Ionen werden aktiviert oder selektioniert und damit ein basisches Wasser, das als Grundsubstanz einen alkalischen pH Wert hat, aber trotzdem wasserähnliche Eigenschaften behält und aufweist und als solches stabil bleibt. Die Präsenz von NaOH ist ein Nebeneffekt der aber chemisch erwähnt ist, denn für eine optimale Ionen Aktivierung/Selektionierung im Durchflusssystem braucht es Konduktoren, wie Natriumchlorid oder ähnliche Produkten. Die Grundsubstanz Wasser enthält positive und negative Ionen. Die Idee der Erfindung besteht darin, die positiven Ionen zu selektionieren und zu aktivieren. Diese selektionierten, positiven Ionen sind Grundprodukt/Plattform und es können dann verschiedene "Beschleuniger" begeben werden, die dem Produkt stärkere Eigenschaften. Die Stabilität wird erhöht. Wasser mit pH Stabilisatoren machen diese Wasser zu einem Grundstoff für Mensch und Tier. Grundstoffe für die Entwicklung von Reinigungsmittel etc. enthalten andere Konzentrationen, oder andere Stabilisatoren. Die selektionierten Ionen haben wasserähnliche Eigenschaften und unterscheiden sich zum Beispiel von Natronlauge oder anderen Laugen.

Das basische Wasser dadurch wird aus einem Gemisch von Lauge und Wasser hergestellt und ist chemisch stabil.

Das basische Wasser kann beispielsweise, als Entsäuerungs-Getränk und/oder pH-Stabilisations-Mittel verwendet werden. Die Lauge wird vorzugsweise mit einem Elektrolyse-Verfahren oder einem mit einem Diaphragmalyse-Verfahren, hergestellt. Als Lauge eignen sich Natronlauge (NaOH), Kaliumlauge (KOH) oder Calziumlauge (CaOH₂). Das Wasser kann beispielsweise Trinkwasser, Tafelwasser, Quellwasser, Mineralwasser, Schmelzwasser, Regenwasser, Leitungswasser, Osmosewasser und / oder Heilwasser sein. Dem basischen Wasser können Aromastoffe und/oder Farbstoffe beigemischt werden.

Das basische Wasser kann beispielsweise auch als Lebensmittel oder hochwertiges Nahrungsergänzungsmittel, als Mineralisierungsmittel, als Getränk oder als Entschlackungsmittel, als Hydrierungsmittel, als Mineralisierungsmittel oder als Entsäuerungsmittel für Mensch und Tier verwendet werden.

Das basische Wasser wird aus einem Gemisch von Lauge und Wasser hergestellt und ist chemisch stabil.

Das basische Wasser kann beispielsweise, als Entsäuerungs-Getränk und/oder pH-Stabilisations-Mittel verwendet werden. Die Lauge wird vorzugsweise mit einem Elektrolyse-Verfahren oder einem mit einem Diaphragmalyse-Verfahren, hergestellt. Als Lauge eignen sich Natronlauge (NaOH), Kaliumlauge (KOH) oder Calziumlauge (CaOH₂) aber auch andere Laugen. Das Wasser kann beispielsweise Trinkwasser, Tafelwasser, Quellwasser, Mineralwasser, Schmelzwasser, Regenwasser, Leitungswasser, Osmosewasser und / oder Heilwasser sein. Dem basischen Wasser können Aromastoffe und/oder Farbstoffe beigemischt werden.

Das basische Wasser kann beispielsweise als Lebensmittel oder hochwertiges Nahrungsergänzungsmittel, als Mineralisierungsmittel, als Getränk oder als Entschlackungsmittel, als Hydrierungsmittel, als Mineralisierungsmittel oder als Entsäuerungsmittel für Mensch und Tier verwendet werden.

Dem basischen Wasser können auch Tenside beigemischt werden, z.B. für die Anwendungen als Spritzmittel für Pflanzen und andere Anwendungen in der Landwirtschaft oder für die Verdünnung von anderen Tensiden, die dann umweltfreundlicher und ungefährlicher sind, oder als Basis für Tenside, das heisst, dass das basische Wasser die Grundlage für jegliche Tensid-Produktion eingesetzt werden kann, ohne dass normales Wasser beigegeben wird oder dass das basische Wasser als Grundprodukt wird oder dass das basische Wasser als Grundprodukt für andere die Oberflächenspannung reduzierende Produkte verwendet werden kann.

## Patentansprüche

1. Basisches Wasser **dadurch gekennzeichnet, dass** es aus einem Gemisch aus Lauge und Wasser hergestellt ist und chemisch stabil ist.

2. Basisches Wasser, nach Anspruch 1, bei welchem eine einzige oder mehrere verschiedene Laugen dem Wasser beigemischt ist/sind.

3. Basisches Wasser nach Anspruch 1 oder 2 bei welchem die Lauge mit einem Elektrolyse-Verfahren , mit einem Diaphragmalyse-Verfahren, mit einem Batch-Verfahren oder mit einem Fow-Throug-Verfahren hergestellt ist.

4. Basisches Wasser nach Anspruch 1 oder 3, bei welchem die einzige Lauge eine Natronlauge (NaOH), eine Kaliumlauge (KOH) oder eine Calziumlauge (CaOH₂) ist.

5. Basisches Wasser, nach einem der Ansprüche 1 bis 4 bei welchem das Wasser ein Trinkwasser, Tafelwasser, Quellwasser, Mineralwasser, Schmelzwasser, Regenwasser, Leitungswasser, Osmosewasser und /oder Heilwasser ist.

6. Basisches Wasser nach einem der Ansprüche 1 bis 5, Aromastoffe und/oder Farbstoffe beigemischt sind.

7. Basisches Wasser nach einem der Ansprüche 1 bis 6, dem ein oder mehrere Aromastoffe zugegeben sind, bei welchem die zugesetzten Aromastoffe oder der zugesetzte Aromastoff Zitronenaroma, Orangenaroma, Rosenwasseraroma ist.

8. Basisches Wasser nach einem der Ansprüche 1 bis 7, bei welchem dem Wasser bei der Herstellung 1% bis 99% Lauge zugegeben werden.

9. Basisches Wasser nach einem der Ansprüche 1-8, bei welchem die zugemischte Lauge einen pH-Wert von 7 bis 14, vorzugsweise einen pH-Wert im Bereich von 8-10 aufweist.

10. Basisches Wasser nach einem der Ansprüche 1-9 das Tensid enthält.

11. Verwendung des basischen Wassers nach einem der Ansprüche 1-10, als basisches Entsäuerungs-Getränk und pH-Stabilisierungs-Mittel.

12. Verwendung des basischen Wassers nach einem der Ansprüche 1-10 als Lebensmittel oder als hochwertiges Nahrungsergänzungs-Mittel, als Entschlackungsmittel, als Fertiggetränk.

13. Verwendung des basischen Wassers nach einem der Ansprüche 1-10, als Hydrierungsmittel, als Mineralisierungsmittel und als Ensäuerungsmittel für Mensch und Tier.

## Geänderte Patentansprüche

### Geänderte Patentansprüche gemäss Regel 137(2) EPÜ.

**1.** Basisches Wasser, das aus einem Gemisch aus Lauge und Wasser hergestellt und chemisch stabil ist, **dadurch gekennzeichnet, dass** es als Getränk insbesondere als Fertiggetränk verwendet wird.

**2.** Basisches Wasser nach Anspruch 1, mit Zusatz von einem oder mehreren verschiedenen Aromastoffen und/oder Farbstoffen.

**3.** Basisches Wasser nach Anspruch 2, bei welchem die zugesetzten Aromastoffe Zitronenaroma und/oder Orangenaroma, Rosenwasseraroma und/oder andere Aromastoffe sind.

**4.** Basisches Wasser nach einem der Ansprüche 1 bis 3 bei welchem die Lauge, die dem Wasser zugemischt wird mit einem Elektrolyse-Verfahren , mit einem Diaphragmalyse-Verfahren, mit einem Batch-Verfahren oder mit einem Flow-Throug-Verfahren hergestellt ist.

**5.** Basisches Wasser nach einem der Ansprüche 1 bis 4, bei welchem Lauge die dem Wasser zugegeben wird Natronlauge (NaOH), Kaliumlauge (KOH) oder Calziumlauge (CaOH₂) ist.

**6.** Basisches Wasser, nach einem der Ansprüche 1 bis 5 bei welchem das Wasser dem die Lauge zugegeben wird Trinkwasser, Tafelwasser, Quellwasser, Mineralwasser, Schmelzwasser, Regenwasser, Leitungswasser, Osmosewasser oder Heilwasser ist.

**7.** Basisches Wasser nach einem der Ansprüche 1 bis 7, bei welchem dem Wasser für das Getränk bei der Herstellung 1% bis 99% Lauge zugegeben werden.

**8.** Basisches Wasser nach einem der Ansprüche 1 bis 7, bei welchem die zugemischte Lauge einen pH-Wert von 7 bis 14, vorzugsweise einen pH-Wert im Bereich von 8-10 aufweist.

**9.** Basisches Getränk, insbesondere Fertiggetränk aus Basischem Wasser nach einem der Ansprüche 1 bis 8 **dadurch** gezeichnet, dass es als Mittel zur Entsäuerung und pH-Stabilisierung für Menschen und Tiere geeignet ist.

**10.** Verwendung des Getränks aus basischem Wasser nach einem der Ansprüche 1 bis 9 als Lebensmittel, als hochwertiges Nahrungsergänzungs-Mittel, als Entschlackungsmittel, als Fertiggetränk.

**11.** Basisches Getränk, insbesondere Fertiggetränk aus Basischem Wasser nach einem der Ansprüche 1 bis 10, **dadurch gekennzeichnet, dass** es als Hydrierungsmittel, als Mineralisierungsmittel und als Entsäuerungsmittel für Menschen und Tiere geeignet ist.
